# EUROPEAN PATENT SPECIFICATION

(11) **EP 4 617 237 B1**
(45) Date of publication and mention of the grant of the patent: **15.04.2026**
(21) Application number: 25155546.2
(22) Date of filing: 03.02.2025
(51) Int. Cl.: C01G 41/00, H01M 4/485

(54) **ACTIVE MATERIAL, ELECTRODE, SECONDARY BATTERY, BATTERY PACK, AND VEHICLE**
AKTIVMATERIAL, ELEKTRODE, SEKUNDÄRBATTERIE, BATTERIEPACK UND FAHRZEUG
MATÉRIAU ACTIF, ÉLECTRODE, BATTERIE SECONDAIRE, BLOC-BATTERIE ET VÉHICULE

(30) Priority: 12.03.2024 JP 2024038030
(43) Date of publication of application: 17.09.2025
(73) Proprietor: Kabushiki Kaisha Toshiba, Tokyo 105-0023 (JP)
(72) Inventor: Fukuda, Yumi, Minato-ku, Tokyo, 105-0023 (JP); Yasuhiro, Harada, Minato-ku, Tokyo, 105-0023 (JP)
(74) Representative: Hoffmann Eitle

(56) References cited:
- US-A1- 2020 251 717
- US-A1- 2021 218 075

## Description

### FIELD

The present disclosure relates to an active material, electrode, secondary battery, battery pack, and vehicle.

### BACKGROUND

In recent years, as a high energy density battery, secondary batteries such as a lithium-ion secondary battery or a nonaqueous electrolyte secondary battery have been actively studied and developed. The secondary battery is anticipated as a power source for vehicles such as hybrid automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well.

One typical negative electrode adopted in a lithium ion battery is a carbon-based negative electrode which uses a carbonaceous material, such as graphite, as an active material. When a battery using a carbon-based negative electrode is repeatedly charged and discharged at a rapid rate, precipitation of dendrites of metallic lithium on the electrode may occur, raising a concern of heat generation or ignition due to internal short circuit. To address this concern, a battery has been developed which uses a metal composite oxide in a negative electrode in place of a carbonaceous material to thereby increase the operation potential of the negative electrode. For example, a battery using a spinel-type lithium titanium composite oxide Li₄Ti₅O₁₂ in the negative electrode has a high average operating potential of 1.55V (vs. Li/Li⁺). Therefore, such a battery can be rapidly and stably charged and discharged, because precipitation of Li dendrites does not proceed, and also has a longer life than that of a battery which uses a carbon-based negative electrode, because Li₄Ti₅O₁₂ operates at a potential at which reductive side reactions an electrolytic solution hardly occurs. However, a battery using Li₄Ti₅O₁₂ in the negative electrode has a drawback in that the theoretical capacity of the active material is as low as 175 mAh/g, and so, the energy density of the battery is lower than that of a battery having a carbon-based negative electrode.

For this reason, utilization of a monoclinic niobium-titanium composite oxide TiNb₂O₇ has been considered. TiNb₂O₇ is an active material which exhibits high capacity while having an operating potential near 1 V (vs. Li/Li⁺) based on the oxidation-reduction potential of lithium. Thus, TiNb₂O₇ is expected to achieve a volume energy density beyond that of the carbon-based negative electrode. However, to commercialize electric vehicles on a full-scale, further enhancement of the energy density of lithium ion secondary batteries is desired in view of achieving increased traveling distance, etc., and thus, development of a rapid-charge battery having even higher capacity is being desired.

US 2020/251717 A1 and US 2021/218075 A1 describe different Nb-W complex oxides used as active materials in secondary batteries, inter alia a compound of formula Nb₁₆W₅O₅₅ is described.

### BRIEF DESCRIPTION OF THE DRAWINGS

FIG. 1 is a cross-sectional view schematically showing an example of a secondary battery according to an approach.
FIG. 2 is an enlarged cross-sectional view of section A of the secondary battery shown in FIG. 1.
FIG. 3 is a partially cut-out perspective view schematically showing another example of the secondary battery according to an approach.
FIG. 4 is an enlarged cross-sectional view of section B of the secondary battery shown in FIG. 3.
FIG. 5 is a perspective view schematically showing an example of a battery module according to an approach.
FIG. 6 is an exploded perspective view schematically showing an example of a battery pack according to an approach.
FIG. 7 is a block diagram showing an example of an electric circuit of the battery pack shown in FIG. 6.
FIG. 8 is a partially see-through diagram schematically showing an example of a vehicle according to an approach.
FIG. 9 is a diagram schematically showing an example of a control system related to an electric system in the vehicle according to an approach.
FIG. 10 is a graph showing a spectrum obtained through wide-angle X-ray diffraction measurement of an active material composite oxide in Example 1;
FIG. 11 is a graph showing a spectrum obtained through wide-angle X-ray diffraction measurement of an active material composite oxide in Example 2.
FIG. 12 is a graph showing a spectrum obtained through wide-angle X-ray diffraction measurement of an active material composite oxide in Example 3.
FIG. 13 is a graph showing a spectrum obtained through wide-angle X-ray diffraction measurement of an active material composite oxide in Example 4.
FIG. 14 is a graph showing a spectrum obtained through wide-angle X-ray diffraction measurement of an active material composite oxide in Example 5.
FIG. 15 is a graph showing a spectrum obtained through wide-angle X-ray diffraction measurement of an active material composite oxide in Example 6.
FIG. 16 is a graph showing a spectrum obtained through wide-angle X-ray diffraction measurement of an active material composite oxide in Example 7.
FIG. 17 is a graph showing a spectrum obtained through wide-angle X-ray diffraction measurement of an active material composite oxide in Example 8.
FIG. 18 is a graph showing a spectrum obtained through wide-angle X-ray diffraction measurement of an active material composite oxide in Example 9.
FIG. 19 is a graph showing a spectrum obtained through wide-angle X-ray diffraction measurement of an active material composite oxide in Example 10.
FIG. 20 is a graph showing a spectrum obtained through wide-angle X-ray diffraction measurement of an active material composite oxide in Example 11.
FIG. 21 is a graph showing a spectrum obtained through wide-angle X-ray diffraction measurement of an active material composite oxide in Comparative Example 1.

### DETAILED DESCRIPTION

According to one approach, provided is an active material including a composite oxide having a monoclinic crystal structure. The composite oxide is represented by a general formula LiₓNb_{16-y-z}M_{z}W_{5+y}O₅₅₋ᵤ. Herein, M includes at least one selected from the group consisting of Ta, Ti, Zr, Al, and Fe, and 0 ≤ x ≤ 5, -0.5 ≤ y ≤ 2, 0 ≤ z ≤ 2, and 4 ≤ u ≤ 9.

According to another approach, provided is an electrode including the above active material.

According to a further other approach, provided is a secondary battery including a positive electrode, a negative electrode, and an electrolyte. The negative electrode includes the above electrode.

According to a still another approach, provided is a battery pack including the above secondary battery.

In addition, according an approach, provided is a vehicle including the above battery pack.

According to the above approaches, provided is an active material and electrode that can realize a high capacity secondary battery, a secondary battery and battery pack with high capacity, as well as a vehicle including the battery pack.

In order to obtain a high-capacity material, a material capable of a large amount of charge compensation upon insertion of carrier ions (e.g., lithium ions) is desirably selected. Thus, for example, a composite oxide containing tungsten (W), which is a hexavalent element, may be adopted as a compound having a higher capacity. As a tungsten-niobium composite oxide material, there is a compound having a crystal structure represented by W₈Nb₁₈O₆₉, W₅Nb₁₆O₅₅, or the like, as a composition with a large proportion of W.

Hereinafter, approaches will be described with reference to the drawings. The same reference signs are applied to common components throughout the approaches and overlapping explanations are omitted. Each drawing is a schematic view for explaining the approach and promoting understanding thereof; though there may be differences in shape, size and ratio from those in an actual device, such specifics can be appropriately changed in design taking the following explanations and known technology into consideration.

### (First Approach)

According to a first approach, an active material that includes a composite oxide having a monoclinic crystal structure is provided. The above composite oxide is represented by general formula LiₓNb_{16-y-z}M_{z}W_{5+y}O₅₅₋ᵤ. In the general formula, M includes at least one selected from the group consisting of Ta, Ti, Zr, Al, and Fe. Each of the subscripts in the formula respectively satisfy 0 ≤ x ≤ 5, - 0.5 ≤ y ≤ 2, 0 ≤ z ≤ 2, and 4 ≤ u ≤ 9. The active material may include minuscule amounts of other elements as described later, and forms including the element(s) in minuscule amounts within the composite oxide as substituent elements are also included in the first approach; however, the above general formula represents a composition with such minuscule substituent elements omitted.

The active material may be an active material for a battery. The active material may be, for example, an electrode active material used in an electrode of secondary battery such as a lithium ion battery, a nonaqueous electrolyte battery, etc. More specifically, the active material may be, for example, a negative electrode active material used in the negative electrode of a secondary battery.

A high-capacity secondary battery can be realized by using, as an electrode active material, a composite oxide represented by the above general formula LiₓNb_{16-y-z}M_{z}W_{5+y}O₅₅₋ᵤ (M is at least one among Ta, Ti, Zr, Al, and Fe; 0 ≤ x ≤ 5, -0.5 ≤ y ≤ 2, 0 ≤ z ≤ 2, and 4 ≤ u ≤ 9) and having a monoclinic crystal structure.

### <Active Material>

The composite oxide having a monoclinic structure included in the active material according to the first approach corresponds to a portion of an oxide material having a structure of a Wadsley-Roth phase, which is a crystal phase among niobium-containing oxide materials. The Wadsley-Roth phase takes a crystal structure in which a structure with vertex-sharing oxygen-metal octahedra forms a rhenium oxide-type block structure, and the blocks share the edges of the octahedra or a tetrahedron is interposed between the blocks and shares vertices to thereby connect the rhenium oxide-type blocks (ReO₃-type blocks) in a three-dimensional direction. W₅Nb₁₆O₅₅, which is reported as an example of the tungsten-niobium composite oxide having the structure of the Wadsley-Roth phase, contains W of a high valence at a high atomic weight and is therefore expected to provide high capacity. When the oxide is synthesized according to ordinary firing, W easily volatilizes during firing, resulting in a different structure such as W₃Nb₁₄O₄₄. With such a material having a reduced content of W, the capacity obtained is low.

As a result of an attempt of improving the capacity by improving the synthesis process of the tungsten-niobium composite oxide, the active material according to the first approach has been found. Specifically, the active material has achieved an improved capacity by means of a highly airtight firing process. By performing firing under highly airtight conditions, W volatilization can be suppressed, and oxygen defects in the resulting oxide can be increased, as well. By suppressing W volatilization, formation of a low-capacity heterogeneous phase such as W₃Nb₁₄O₄₄ can be suppressed. By increasing oxygen defects, the electrical conductivity of the oxide can be improved. Accordingly, when the oxygen defect concentration of the oxide is high (e.g., 4 ≤ u ≤ 9), an active material having an excellent reversible capacity can be obtained. Thus, by performing synthesis using a firing process with a high airtightness, a niobium-tungsten composite oxide having an improved capacity can be obtained.

In the diffraction spectrum according to powder X-ray diffraction for the active material, a peak intensity ratio I₂₄/I₂₅ between a peak intensity I₂₄ of a peak having highest intensity appearing in a range of 2θ = 24.2 ± 0.3° and a peak intensity I₂₅ of a peak appearing in a range of 2θ = 24.8 ± 0.3° is preferably within a range of 0.5 ≤ I₂₄/I₂₅ ≤ 1.5. Furthermore, in the diffraction spectrum according to powder X-ray diffraction for the active material, a peak intensity ratio I₂₀/I₂₅ between a peak intensity I₂₀ of a peak having highest intensity appearing in a range of 2θ = 19.7 ± 0.5° and a peak intensity I₂₅ of a peak appearing in a range of 2θ = 24.8 ± 0.3° is preferably within a range of 0.1 ≤ I₂₀/I₂₅ ≤ 0.5.

The peak intensity I₂₄ of the most intense peak in 20 = 24.2 ± 0.3° being high indicates that the active material has many high-capacity crystal phases similar to W₅Nb₁₆O₅₅. Similarly, the peak intensity I₂₀ of the most intense peak in 2θ = 19.7 ± 0.5° being high indicates that the active material has many high-capacity crystal phases, as well. In contrast, a situation where peak intensities I₂₄ and I₂₀ are low is seen in low-capacity crystal phases like W₃Nb₁₄O₄₄. Therefore, because the active material having the intensity ratio I₂₄/I₂₅ in the above-described range and the active material having the intensity ratio I₂₀/I₂₅ in the above-described range have many high-capacity crystal phases and few low-capacity heterogeneous phases, a high-capacity secondary battery can be realized.

As indicated by the general formula LiₓNb_{16-y-z}M_{z}W_{5+y}O₅₅₋ᵤ, the niobium-tungsten composite oxide may include a metal element M as a third metal element in addition to niobium and titanium. Among Ta, Ti, Zr, Al, and Fe, Ta (tantalum) or Ti (titanium) as a metal element M is preferably included. With a composite oxide having Ta as M, cycle performance is further improved for a battery. With a composite oxide having Ti as M, rapid discharge performance (discharge rate performance) is further improved for a battery.

In addition to the above metal elements M (Ta, Ti, Zr, Al, Fe), the active material may further include at least one selected from the group consisting of Sc, Y, V, Cr, Co, Mn, and Ga. The content of the at least one element selected from the group consisting of Sc, Y, V, Cr, Co, Mn, and Ga is preferably a minuscule amount. Specifically, the content thereof is preferably limited to 10 ppm to 10000 ppm in terms of mass, and is more preferably limited to be within the range of 3000 ppm or less in terms of mass with respect to the general formula LiₓNb_{16-y-z}M_{z}W_{5+y}O₅₅₋ᵤ. The active material according to the first approach does not exclude a substituted composite oxide which includes a minutely substituting element incorporated into the crystal structure of the composite oxide even though the composition of the composite oxide is represented by the general formula LiₓNb_{16-y-z}M_{z}W_{5+y}O₅₅₋ᵤ. Obviously, a minuscule amount of element(s) not incorporated into the crystal structure of the composite oxide is not presented in the above general formula, either; however, the active material according to the first approach also encompasses an aspect of including the above element(s) Sc, Y, V, Cr, Co, Mn, or Ga in addition to the composite oxide. The active material according to the first approach may be an unsubstituted composite oxide of LiₓNb_{16-y-z}M_{z}W_{5+y}O₅₅₋ᵤ not including the above minutely substituting element(s).

The active material according to the first approach may be in a particulate form, for example. Namely, the active material may be formed of particles of a composite oxide represented by the general formula and having a monoclinic crystal structure. The active material may be in the form of discrete primary particles, secondary particles formed of agglomerated primary particles, or a mixture of the primary particles and the secondary particles.

An average primary particle size of the active material is preferably 10 µm or less, more preferably 5 µm or less, and still more preferably 3 µm or less. If the average primary particle size of the active material is small, the distance of diffusion of lithium ions in the primary particles is short, and thus the diffusivity of lithium ions tends to improve. In addition, if the average primary particle size of the active material is small, the reaction area increases, and thus the reactivity between the active material and lithium ions increases, whereby insertion-extraction reaction of lithium ions tends to improve.

An average secondary particle size of the active material is preferably from 1 µm to 50 µm. When the average secondary particle size of the active material is within this range, the productivity at the time of manufacturing an electrode can be improved, and also, a battery with favorable performance can be obtained. The average secondary particle size refers to a particle size at which a cumulative volume value is 50% in a particle size distribution obtained using a laser diffraction particle size analyzer.

The BET specific surface area of the active material is preferably from 3.0 m²/g to 120 m²/g, and more preferably from 4.0 m²/g to 110 m²/g. When an active material having a high specific surface area is used, the discharge rate performance of the battery can be increased. When an active material having a low specific surface area is used, the life performance of the battery can be improved, and the coatability of a slurry including the active material can be favorable in the process of producing an electrode, which will be described later in the second approach.

The BET specific surface area refers to a specific surface area obtained by a nitrogen BET (Brunauer, Emmet and Teller) method. The method for obtaining the specific surface area based on the nitrogen BET method will be described in detail, later.

### <Production Method>

The active material according to the first approach can be produced as described below.

For example, the composite oxide can be synthesized by a solid-phase method. However, firing is performed under a highly airtight condition, in order to suppress volatilization of tungsten (W) and also to increase oxygen defects.

As starting materials, a niobium compound, a tungsten compound, and a compound of metal element M (Ta, Ti, Zr, Al, Fe) are used. Examples of the niobium compound include niobium hydroxide and niobium oxide. Examples of the tungsten compound include ammonium paratungstate and a hydrate thereof, ammonium tungstate and a hydrate thereof, tungsten hydroxide, and tungsten oxide. Examples of compounds of metal element M include hydroxides and oxides of the respective metal.

As the starting materials, for example, powdery materials are used. After the starting materials are weighed at a predetermined composition ratio, the starting materials are mixed sufficiently. Mixing may be performed by either a wet method or a dry method. In a case where wet mixing was performed, drying is amply performed after mixing. After the starting materials are mixed, the mixture is press-formed into pellets, for example. The obtained pressed product if wrapped, for example, in a foil made of heat-resistant material such as platinum (Pt), and on top of that, accommodated into a closed container to perform firing in a state where airtightness is made high.

The firing may include pre-firing performed prior to main firing. Pre-firing is preferably performed at a temperature of 600°C to 800°C for 5 hours to 20 hours. The solid-phase reaction can be progressed in such ranges of firing temperature and firing time. By having reaction progress in advance the pre-firing prior to main firing, the reactivity can be enhanced.

The main firing is preferably performed at a temperature of 1100°C to 1400°C for 5 hours to 20 hours. In such ranges of firing temperature and firing time, the solid-phase reaction can be progressed and a target crystal phase can be obtained.

After the firing, pulverization of the fired product may be performed using a pulverization apparatus until the materials have a predetermined average particle size, whereby an active material in particulate form or powder form can be obtained, for example.

### <Various Measurement Methods>

Measurement methods for the active material will be explained below. Specifically, examination of the composite oxide, measurement of the average particle size of the active material particles, and measurement of the specific surface area of the active material will be described.

In a case where an active material included in an electrode of a battery is to be taken as a sample, the measurement sample is prepared by performing a pretreatment by the following method. First, the battery is completely discharged. Next, the battery is disassembled in a glove box under an argon atmosphere, and the electrode is taken out. Next, the taken-out electrode is washed using a solvent such as ethyl methyl carbonate. Further processing is performed in accordance with the measurement to be performed, so as to prepare a sample in appropriate form.

### (Examination of Composite Oxide)

Examination as to whether the active material includes the composite oxide having a monoclinic crystal structure and represented by the general formula LiₓNb_{16-y-z}M_{z}W_{5+y}O₅₅₋ᵤ described above can be made by a combination of a wide-angle X-ray diffraction (XRD) method, inductively coupled plasma (ICP) emission spectrometry, and inert gas dissolution-infrared absorption spectroscopy. The crystal structure can be determined by the wide-angle XRD method, and the elemental composition can be determined by the ICP emission spectrometry and the inert gas dissolution-infrared absorption spectroscopy.

XRD measurement is performed as follows. First, active material particles are sufficiently pulverized to obtain a powder sample. The average particle size of the powder sample is preferably set to 20 µm or less. The average particle size can be obtained by a laser diffraction particle size distribution measuring apparatus.

Next, the powder sample is packed in the holder portion of a glass sample plate, and the surface is made flat. As the glass sample plate, for example, a glass sample plate whose holder portion has a depth of 0.2 mm may be used.

Next, the glass sample plate is placed in a powder X-ray diffraction apparatus, and the XRD spectrum is measured using Cu-Kα rays. Specific measurement conditions are, for example, as follows:
X-ray diffraction apparatus: SmartLab available from Rigaku
X-ray source: Cu-Kα rays
Output: 40 kV, 200 mA
Package measurement name: general-purpose measurement (concentration method)
Incident parallel slit opening angle: 5°
Incident longitudinal restriction slit length: 10 mm
Light-receiving PSA: absent
Light-receiving parallel slit opening angle: 5°
Monochromatization method: Kβ filtering method
Measurement mode: continuous
Incident slit width: 0.5°
Light-receiving slit width: 20 mm
Measurement range (2θ): 5° to 70°
Sampling width (2θ): 0.01°
Scan speed: 1° to 20°/min

The XRD spectrum corresponding to the active material is thus obtained. In the XRD spectrum, the abscissa represents the incident angle (2θ), and the ordinate represents the diffraction intensity (cps). The scan speed may be adjusted within a range where the number of counts for the main peak of the XRD spectrum would be 50 thousand counts or more and 150 thousand counts or less.

When an active material contained in the electrode of a battery is used as a sample, the washed electrode obtained by the performing the above pretreatment is cut to about the same area as the area of the holder of the glass sample plate, to thereby obtain a measurement sample.

Next, the obtained measurement sample is directly put onto the glass holder, and XRD measurement is performed. Subsequently, measurement is performed using the XRD for the materials other than the active material that may be contained in the electrode, such as a current collector, electro-conductive agent, binder, and the like, thereby ascertaining the XRD pattern derived from those materials. Next, if there are overlapping peaks between a peak considered to be derived from the active material and the peaks of the other materials in the measurement sample, the peaks of the materials other than the active material are separated. The XRD spectrum concerning the active material is thus obtained.

A Rietveld method is used to ascertain whether the crystal structure of the sample measured belongs to the above-described monoclinic crystal structure. The ascertainment can be made by examining that a value R_{wp}, the reliability factor, is at least 20% or less, more preferably 15% or less using, for example, RIETAN-FP as an analysis program. At this time, if there is a peak including impurities and the peak overlaps with a phase to be analyzed, the analysis precision may be degraded. In this case, analysis is preferably performed with a section that clearly overlaps with the impurities-derived peak excluded from the analysis range. This is not always the case, however, because the intensity ratio varies when a material other than the active material according to the first approach is included in the sample, when the orientation of the sample is significantly high, or when coarse particles are mixed. Therefore, the structure is determined by ascertaining that there is no contradiction in the position or relative intensity of all the peaks attributed to the crystal structure. Also, when the spectrum intensity is low and the background intensity is low, the value R_{wp} may become small. Thus, the reliability factor does not have meaning in its absolute value, but has meaning in relatively determining how well the fitting is under certain measurement conditions.

A detailed explanation of the analysis method using RIETAN-FP is given in, for example, Chapter 9 "Let's use RIETAN-FP" in Izumi Nakai, Fujio Izumi, "Facts about Powder X-ray Analysis", 1st edition (2002), The Discussion Group of X-Ray Analysis, The Japan Society for Analytical Chemistry, (Asakura Shoten).

RIETAN-FP is a program for Rietveld analysis that was available for free on the Internet at the developer's webpage (closed in 2022). At least in February 2024, the program had been available through the following web archive:
http://web.archive.org/web/20220209014122fw_/http://fu jioizumi.verse.jp/download/download.html

In regard to the content of the respective elements of the active material particles included in the sample, with respect to that of metal elements, the content can be ascertained by the ICP emission spectrometry. With respect to that of the element O, the content can be quantified by a method such as inert gas dissolution-infrared absorption spectroscopy; however, precise quantification is difficult to perform.

For active material particles included in the electrode, after performing the above-described pretreatment, the following treatment is further performed. After washing the electrode, a component containing an active material (e.g., the active material-containing layer described in the second approach) is dislodged from the current collector of the electrode, for example. The portion dislodged off from the electrode is heated for a short period of time in air (at 500°C for about 1 hour), to sinter off unnecessary portions such as a binder component and carbon. Thereafter, the ICP emission analysis, etc., can be performed to quantify the content of the respective elements.

### (Measurement of Average Particle Size)

The average primary particle size of the active material can be determined by observation using a scanning electron microscope (SEM). Specifically, the average primary particle size by the SEM observation can be calculated by the following method.

First, in a primary particle of a SEM image obtained by the SEM observation, the length of the longest portion and the length of the shortest portion are measured, and the arithmetic mean value of these lengths is calculated as the primary particle size. The measurement of the primary particle size is done for 100 discriminately selected particles, and the average value thereof is set as the average primary particle size.

The average secondary particle size of the active material can be determined from a particle size distribution measured using a laser diffraction particle size analyzer. As a sample for performing the particle size distribution measurement, used is a dispersion liquid, which is obtained by diluting the active material with N-methyl-2-pyrrolidone such that the concentration of the active material becomes 0.1 mass% to 1 mass%. The particle size at which a cumulative volume value is 50% in the obtained particle size distribution is determined as the average secondary particle size.

### (Measurement of BET specific surface area)

The BET specific surface area for the active material particle can be obtained by the following method.

First, 4 g of the active material is collected as a sample. Next, the evaluation cell of a measuring apparatus is vacuum dried at a temperature of 100°C or more for 15 hours to perform degassing. As the evaluation cell, for example, a 1/2-inch cell, may be used. Next, the sample is placed in the measuring apparatus. As the measuring apparatus, for example, TriStar II 3020 available from Shimadzu-Micromeritics Instrument can be used. Then, in a nitrogen gas at 77K (the boiling point of nitrogen), while gradually increasing a pressure P (mmHg) of the nitrogen gas, the nitrogen gas adsorption amount (mL/g) of the sample is measured for each pressure P. Next, a value obtained by dividing the pressure P (mmHg) by a saturated vapor pressure P₀ (mmHg) of the nitrogen gas is defined as a relative pressure P/P₀, and a nitrogen gas adsorption amount corresponding to each relative pressure P/P₀ is plotted, thereby obtaining an adsorption isotherm. A BET plot is calculated from the nitrogen adsorption isotherm and the BET equation, and the specific surface area is obtained using the BET plot. Note that a BET multipoint method is used to calculate the BET plot.

The active material according to the first approach includes a composite oxide having a monoclinic crystal structure and represented by general formula LiₓNb_{16-y-z}M_{z}W_{5+y}O₅₅₋ᵤ. In the above general formula, M includes at least one selected from the group consisting of Ta, Ti, Zr, Al, and Fe. Subscripts x, y, z, and u are numbers satisfying 0 ≤ x ≤ 5, -0.5 ≤ y ≤ 2, 0 ≤ z ≤ 2, and 4 ≤ u ≤ 9. An electrode using the above composite oxide as the electrode active material has high capacity per volume. Moreover, a secondary battery and battery pack using the above composite oxide as electrode active material has high capacity per volume. Namely, the active material exhibits high capacity.

### (Second Approach)

According to a second approach, an electrode is provided.

The electrode according to the second approach includes the active material according to the first approach. This electrode may be a battery electrode including the active material according to the first approach as an active material for a battery. The electrode as a battery electrode may be, for example, a negative electrode including the active material according to the first approach as a negative electrode active material. Alternatively, the electrode may be a positive electrode including the active material according to the first approach as a positive electrode active material.

The electrode according to the second approach may include a current collector and an active material-containing layer. The active material-containing layer may be formed on both of reverse surfaces or one surface of the current collector. The active material-containing layer may contain the active material, and optionally an electro-conductive agent and a binder.

The active material-containing layer may singly include the active material according to the first approach or include two or more species of the active material according to the first approach. Furthermore, a mixture where one species of the active material according to the first approach or two or more species thereof is further mixed with one species or two or more species of another active material may also be included. The contained proportion of the active material(s) according to the first approach with respect to the total mass of the active material(s) according to the first approach and the other active material(s) is desirably 10% by mass or more and 100% by mass or less.

For example, in a case where the active material according to the first approach is included as the negative electrode active material, examples of other active materials include lithium titanate having a ramsdellite structure (e.g., Li₂₊ₓTi₃O₇, 0 < x ≤ 3), lithium titanate having a spinel structure (e.g., Li₄₊xTi₅O₁₂, 0 < x ≤ 3), monoclinic titanium dioxide (TiO₂), anatase titanium dioxide, rutile titanium dioxide, hollandite titanium composite oxide, orthorhombic titanium composite oxides, monoclinic niobium titanium composite oxides, niobium oxides, niobium titanium oxides, and niobium molybdenum oxides.

Examples of the orthorhombic titanium-containing composite oxide include a compound represented by Li₂₊ₑM2_{2-f}Ti_{6-g}M3ₕO_{14+σ}. Here, M2 is at least one selected from the group consisting of Sr, Ba, Ca, Mg, Na, Cs, Rb and K. M3 is at least one selected from the group consisting of Zr, Sn, V, Nb, Ta, Mo, W, Y, Fe, Co, Cr, Mn, Ni and Al. The respective subscripts in the composition formula are specified as follows: 0 ≤ e ≤ 6, 0 ≤ f < 2, 0 ≤ g < 6, 0 ≤ h < 6, and -0.5 ≤ σ ≤ 0.5. Specific examples of the orthorhombic titanium-containing composite oxide include Li₂₊ₑNa₂Ti₆O₁₄ (0 ≤ e ≤ 6).

Examples of the monoclinic niobium titanium composite oxide include a compound represented by LiₓTi_{1-y}M4_{y}Nb_{2-z}M5_{z}O_{7+δ}. Here, M4 is at least one selected from the group consisting of Zr, Si, and Sn. M5 is at least one selected from the group consisting of V, Ta, and Bi. The respective subscripts in the composition formula are specified as follows: 0 ≤ x ≤ 5, 0 ≤ y < 1, 0 ≤ z < 2, and - 0.3 ≤ δ ≤ 0.3. Specific examples of the monoclinic niobium titanium composite oxide include LiₓNb₂TiO₇ (0 ≤ x ≤ 5).

Another example of the monoclinic niobium titanium composite oxide is a compound represented by LiₓTi_{1-y}M6_{y+z}Nb_{2-z}O_{7-δ}. Here, M6 is at least one selected from the group consisting of Mg, Fe, Ni, Co, W, Ta, and Mo. The respective subscripts in the composition formula are specified as follows: 0 ≤ x < 5, 0 ≤ y < 1, 0 ≤ z < 2, and - 0.3 ≤ δ ≤ 0.3.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle. In addition, the current collecting performance of the active material-containing layer may be improved by coating carbon or an electro-conductive material onto the active material surface together with using the electro-conductive agent (s) .

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportion of active material, electro-conductive agent and binder in the active material-containing layer may be appropriately changed according to the use of the electrode. For example, in the case of using the electrode as a negative electrode of a secondary battery, the active material (negative electrode active material), electro-conductive agent and binder in the active material-containing layer are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, and excellent cycling performances can be expected. On the other hand, an amount of each of the electro-conductive agent and binder is preferably 30% by mass or less, in view of increasing the capacity.

In the case where the active material surface is covered with carbon or an electro-conductive material, the amount of covering material may be assumed to be included in the amount of electro-conductive agent. The amount of coverage by the carbon or electro-conductive material is preferably 0.5% by mass or more and 5% by mass or less. With a coverage amount within this range, the current-collecting performance and electrode density can be made high.

There may be used for the current collector, a material which is electrochemically stable at the potential (vs. Li/Li⁺) at which lithium (Li) is inserted into and extracted from the active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 µm to 20 µm. The current collector having such a thickness can maintain balance between the strength and weight reduction of the electrode.

The current collector may include a portion where the active material-containing layer is not formed on a surface thereof. This portion may serve as an electrode tab.

The electrode may be fabricated by the following method, for example. First, active material, electro-conductive agent, and binder are suspended in a solvent to prepare a slurry. The slurry is applied onto one surface or both of reverse surfaces of a current collector. Next, the applied slurry is dried to form a layered stack of active material-containing layer and current collector. Then, the layered stack is subjected to pressing. The electrode can be fabricated in this manner.

Alternatively, the electrode may also be fabricated by the following method. First, active material, electro-conductive agent, and binder are mixed to obtain a mixture. Next, the mixture is formed into pellets. Then the electrode can be obtained by arranging the pellets on the current collector.

The electrode according to the second approach includes the active material according to the first approach. Thus, the electrode according to the second approach can realize a secondary battery with high capacity.

### (Third Approach)

According to a third approach, there is provided a secondary battery including a negative electrode, a positive electrode, and an electrolyte. As the negative electrode, positive electrode, or both the negative and positive electrodes, the secondary battery includes the electrode according to the second approach. That is, the secondary battery according to the third approach includes as a battery electrode, an electrode including the active material according to the first approach as a battery active material. A desirable aspect of the secondary battery includes the electrode according to the second approach as the negative electrode. Namely, the desirable aspect of the secondary battery includes as the negative electrode, the electrode including the active material according to the first approach as a battery active material. Hereinafter, the desirable aspect will be described.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

### 1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the second approach. The negative electrode active material-containing layer contains the active material according to the first approach as negative electrode active material.

Of the details of the negative electrode, portions that overlap with the details described in the second approach are omitted.

The density of the negative electrode active material-containing layer (excluding the current collector) is preferably from 1.8 g/cm³ to 2.8 g/cm³. The negative electrode having the density of the negative electrode active material-containing layer within this range is excellent in energy density and ability of holding the electrolyte. The density of the negative electrode active material-containing layer is more preferably from 2.1 g/cm³ to 2.6 g/cm³.

The negative electrode may, for example, be fabricated by the same method as that for the electrode according to the second approach.

### 2) Positive Electrode

The positive electrode may include a positive electrode current collector and a positive electrode active material-containing layer. The positive electrode active material-containing layer may be formed on one surface or both of obverse and reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y ≤ 1, and LiₓCoPO₄; 0 < x ≤ 1), iron sulfate (Fe₂(SO₄)₃), vanadium oxides (e.g., V₂O₅), and lithium nickel cobalt manganese composite oxide (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxide (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y + z < 1). The positive electrode potential can be made high by using these positive electrode active materials.

When an ambient temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 µm. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. With the positive electrode active material having a specific surface area of 0.1 m²/g or more, sufficient sites for inserting and extracting Li ions can be secured. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be fabricated by a method similar to that for the electrode according to the second approach, for example, using a positive electrode active material.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bistrifluoromethylsulfonylimide (LiN(CF₃SO₂)₂), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula Li₁₊ₓMα₂(PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca). The subscript x is within the range of 0 ≤ × ≤ 2.

Specific examples of the lithium phosphate solid electrolyte having the NASICON structure include a LATP compound represented by Li₁₊ₓAlₓTi₂₋ₓ(PO₄)₃ where 0.1 ≤ × ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCax(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}); a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mδ₂₋ₓZrₓO₁₂ where Mδ is one or more selected from the group consisting of Nb and Ta, and 0 ≤ x ≤ 2 (e.g., Li₇La₃Zr₂O₁₂); and a compound having a perovskite structure and represented by La_{2/3-x}LiₓTiO₃ where0.3 ≤ x ≤ 0.7.

One or more among the above compounds may be used as the solid electrolyte. Two or more of the above solid electrolytes may be used, as well.

### 4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

### 6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

### 7) Positive Electrode Terminal

The positive electrode terminal may be made of, for example, a material that is electrically stable in the potential range of 3 V to 4.5 V (vs. Li/Li⁺) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

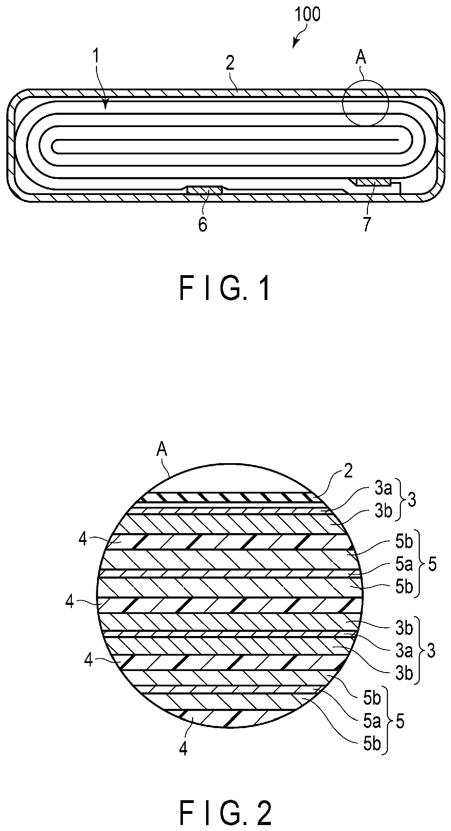

FIG. 1 is a cross-sectional view schematically showing an example of the secondary battery. FIG. 2 is an enlarged cross-sectional view of section A of the secondary battery shown in FIG. 1.

The secondary battery 100 shown in FIGS. 1 and 2 includes a bag-shaped container member 2 shown in FIG. 1, an electrode group 1 shown in FIGS. 1 and 2, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 1, the electrode group 1 is a wound electrode group in a flat form. The wound electrode group 1 in a flat form includes a negative electrode 3, a separator 4, and a positive electrode 5, as shown in FIG. 2. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 2. For the other portions of the negative electrode 3, negative electrode active material-containing layers 3b are formed on both of obverse and reverse surfaces of the negative electrode current collector 3a.

The positive electrode 5 includes a positive electrode current collector 5a and positive electrode active material-containing layers 5b formed on both of obverse and reverse surfaces of the positive electrode current collector 5a.

As shown in FIG. 1, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

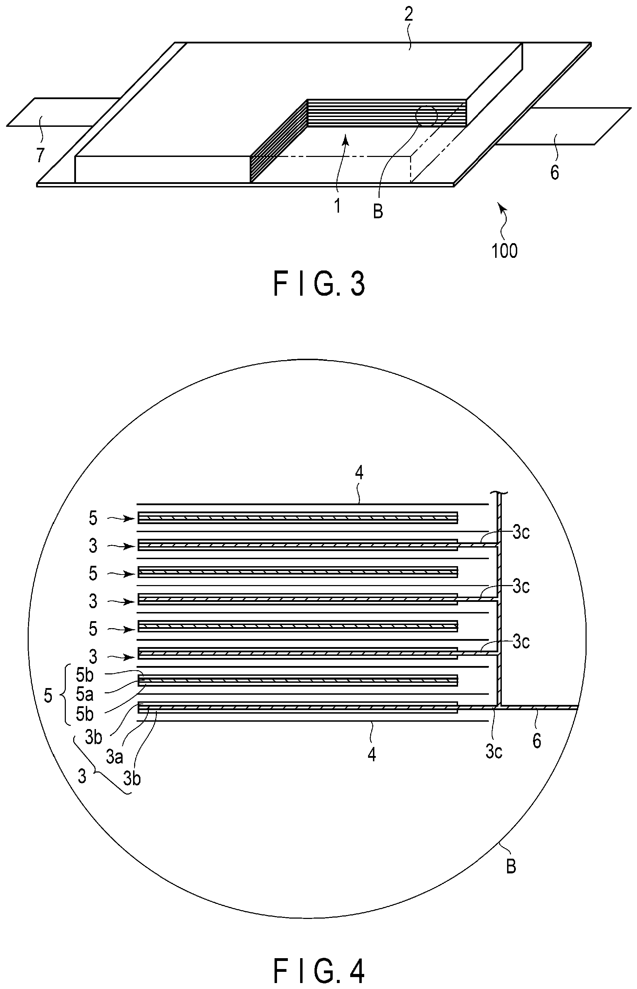

The secondary battery according to the approach is not limited to the secondary battery of the structure shown in FIGS. 1 and 2, and may be, for example, a battery of a structure as shown in FIGS. 3 and 4.

FIG. 3 is a partially cut-out perspective view schematically showing another example of the secondary battery. FIG. 4 is an enlarged cross-sectional view of section B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 4, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 4, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third approach includes the electrode according to the second approach. Thus, the secondary battery can exhibit high capacity.

### (Fourth Approach)

According to a fourth approach, a battery module is provided. The battery module includes plural of secondary batteries according to the third approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

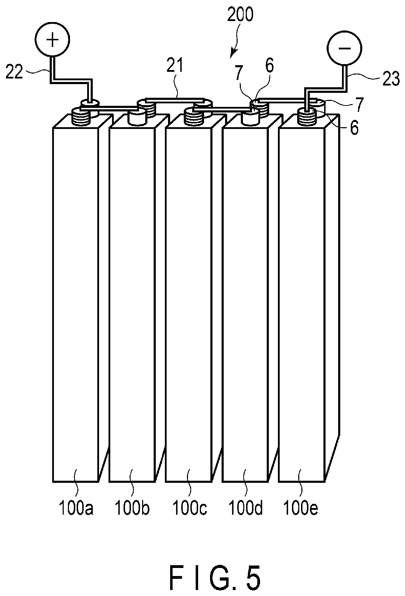

FIG. 5 is a perspective view schematically showing an example of the battery module. The battery module 200 shown in FIG. 5 includes five single-batteries 100a to 100e, four bus bars 21, a positive electrode-side lead 22, and a negative electrode-side lead 23. Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 5 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the fourth approach includes the secondary battery according to the third approach. Therefore, the battery module can exhibit high capacity.

### (Fifth Approach)

According to a fifth approach, a battery pack is provided. The battery pack includes a battery module according to the fourth approach. The battery pack may include a single secondary battery according to the third approach, in place of the battery module according to the fourth approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

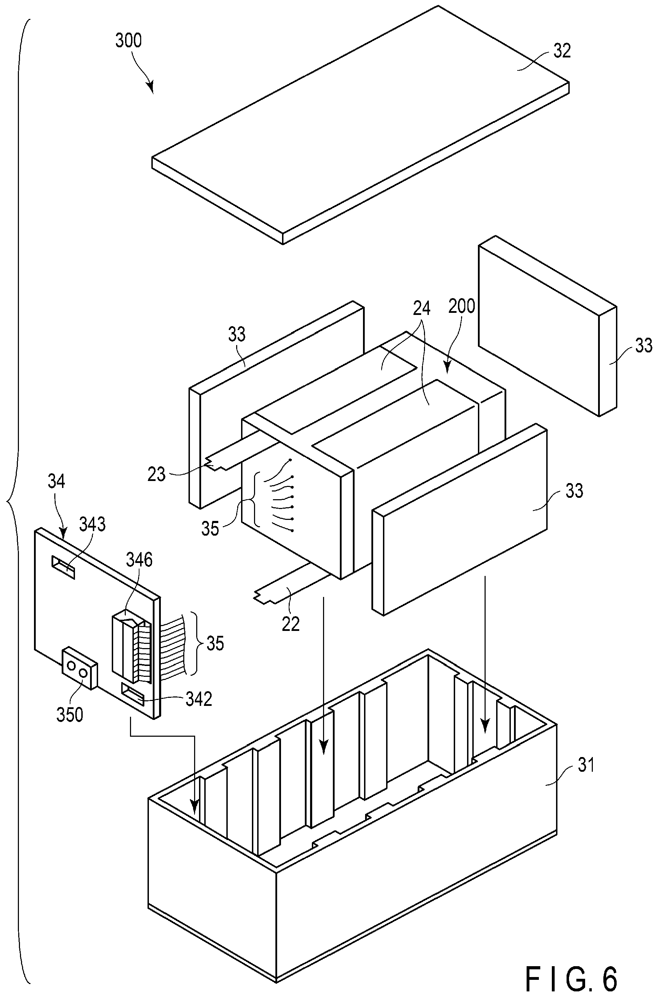

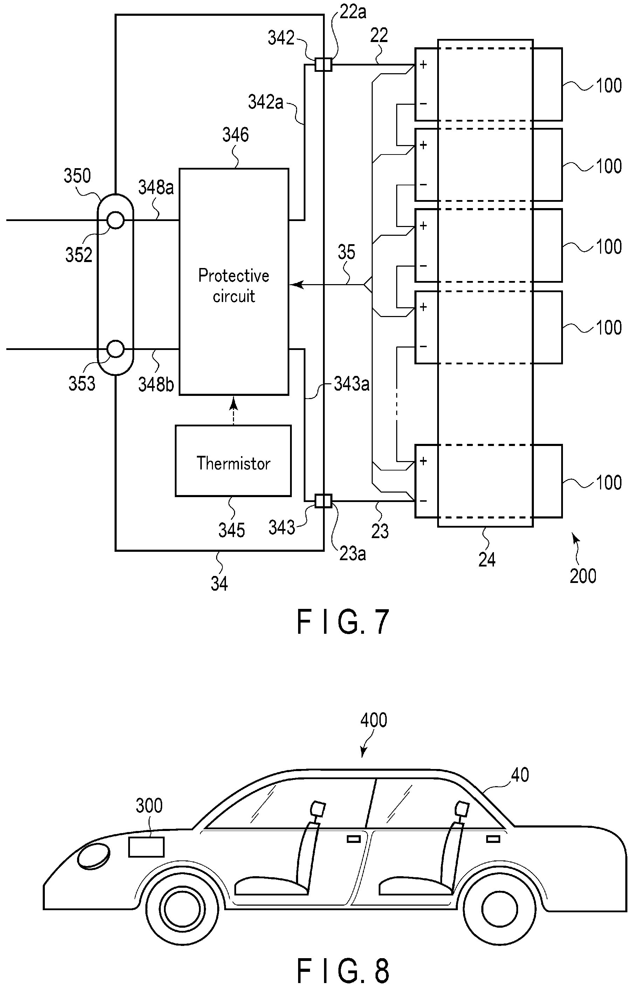

FIG. 6 is an exploded perspective view schematically showing an example of the battery pack. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

The housing container 31 shown in FIG. 6 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 7. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach is provided with the secondary battery according to the third approach or the battery module according to the fourth approach. Accordingly, the battery pack can exhibit high capacity.

### (Sixth Approach)

According to a sixth approach, a vehicle is provided. The battery pack according to the fifth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may be installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 8 is a partially see-through diagram schematically showing an example of the vehicle.

A vehicle 400, shown in FIG. 8 includes a vehicle body 40 and a battery pack 300 according to the fifth approach. In the example shown in FIG. 8, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 8, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

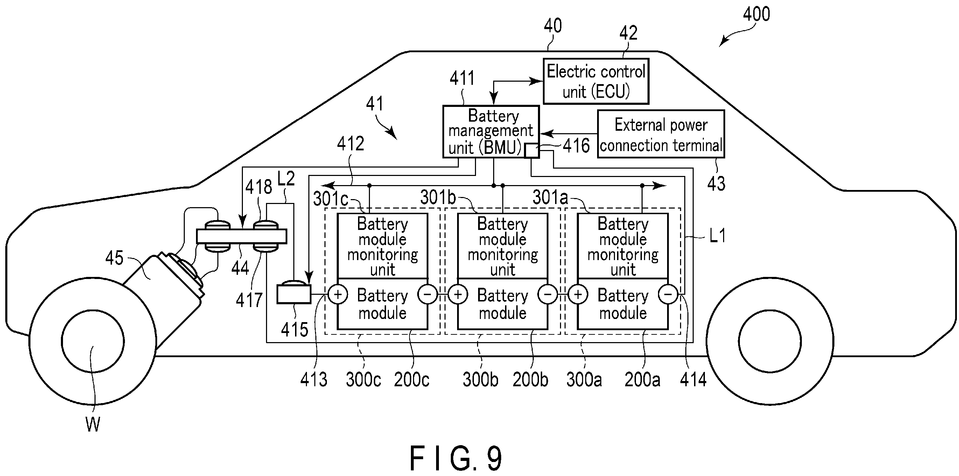

Next, with reference to FIG. 9, an aspect of operation of the vehicle according to the approach is explained.

FIG. 9 is a diagram schematically showing an example of a control system related to an electric system in the vehicle. A vehicle 400, shown in FIG. 9, is an electric automobile.

The vehicle 400, shown in FIG. 9, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the third approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 9) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Thus, a high performance vehicle can be provided.

### Examples

Hereinafter, the approaches will be described in more detail based on Examples. It should be noted, however, that the present invention is not limited to the Examples described below.

### <Synthesis>

### (Example 1)

An active material of Example 1 was obtained as follows. 2.921 g of niobium pentoxide Nb₂O₅ and 1.739 g of tungsten trioxide WO₃ were weighed out, then mixed using an agate mortar and an agate pestle for 30 minutes, while adding an appropriate amount of ethanol C₂H₅OH in a dropwise manner. The mixture was dried in air at 80°C for 6 hours, 2 g thereof was filled in a press mold having a diameter of 15 mm and subjected to uniaxial pressing at 15 Mpa, thereby forming a pellet having a diameter of 15 mm. The obtained pellet was wrapped with a Pt foil having a thickness of 100 µm, eliminating any gap. The wrapped pellet was accommodated in a Pt crucible, covered with a lid, and subjected to pre-firing at 700°C for 12 hours in air and firing at 1200°C for 6 hours successively. The obtained fired product was pulverized and powdered.

### (Example 2)

An active material of Example 2 was obtained by performing synthesis as in Example 1 except that the temperature of 6-hour firing following pre-firing was changed to 1300°C.

### (Example 3)

An active material of Example 3 was obtained by performing synthesis as in Example 1 except that the temperature of 6-hour firing following pre-firing was changed to 1350°C.

### (Example 4)

An active material of Example 4 was obtained by performing synthesis as in Example 1 except that the temperature of 6-hour firing following pre-firing was changed to 1400°C.

### (Example 5)

An active material of Example 5 was obtained by performing synthesis as in Example 1 except that the starting materials were changed to 2.977 g of niobium oxide Nb₂O₅, 0.128 g of titanium dioxide TiO₂, and 2.226 g of tungsten trioxide WO₃.

### (Example 6)

An active material of Example 6 was obtained by performing synthesis as in Example 5 except that the temperature of 6-hour firing following pre-firing was changed to 1300°C.

### (Example 7)

An active material of Example 7 was obtained by performing synthesis as in Example 1 except that the starting materials were changed to 2.472 g of niobium pentoxide Nb₂O₅, 0.248 g of titanium dioxide TiO₂, and 2.515 g of tungsten trioxide WO₃.

### (Example 8)

An active material of Example 8 was obtained by performing synthesis as in Example 7 except that the temperature of 6-hour firing following pre-firing was changed to 1300°C.

### (Example 9)

An active material of Example 9 was obtained by performing synthesis as in Example 1 except that the starting materials were changed to 2.871 g of niobium pentoxide Nb₂O₅, 0.530 g of tantalum pentoxide Ta₂O₅, and 1.739 g of tungsten trioxide WO₃.

### (Example 10)

An active material of Example 10 was obtained by performing synthesis as in Example 1 except that the starting materials were changed to 2.921 g of niobium pentoxide Nb₂O₅, 0.193 g of zirconium oxide ZrO₂, and 2.184 g of tungsten trioxide WO₃.

### (Example 11)

An active material of Example 11 was obtained by performing synthesis as in Example 10 except that the temperature of 6-hour firing following pre-firing was changed to 1300°C.

### (Comparative Example 1)

An active material of Comparative Example 1 was obtained as follows. 2.921 g of niobium pentoxide Nb₂O₅ and 1.739 g of tungsten trioxide WO₃ were weighed out, then mixed, using an agate mortar and an agate pestle for 30 minutes, while adding an appropriate amount of ethanol C₂H₅OH in dropwise manner. The mixture was dried in air at 80°C for 6 hours, filled in an alumina crucible without a lid, and subjected to pre-firing at 700°C for 12 hours in air and firing at 1200°C for 6 hours successively.

### <Analysis of Composition>

For each of the powders obtained in Examples 1 to 11 and Comparative Example 1, the composition of the composite oxide was determined by analyzing the content elements according to the method described above. Table 1 lists the composition determined by the analysis. The analyzed composition shown in Table 1 indicates the stoichiometric ratio normalized by setting the sum of the content proportions of the metal elements to 21. Table 1 also shows the values of subscripts y, z, and u when each composition is fit into the general formula LiₓNb_{16-y-z}M_{z}W_{5+y}O₅₅₋ᵤ.

**[Table 1]**

| | Analyzed Composition | | | | | | Subscripts in Formula | | |
|---|---|---|---|---|---|---|---|---|---|
| | Nb | W | Ti | Ta | Zr | O | y | z | u |
| Example 1 | 16 | 5.0 | - | - | - | 49 | 0 | 0 | 6 |
| Example 2 | 16.1 | 4.9 | - | - | - | 49 | -0.1 | 0 | 6 |
| Example 3 | 16.1 | 4.9 | - | - | - | 49 | -0.1 | 0 | 6 |
| Example 4 | 16.1 | 4.9 | - | - | - | 49 | -0.1 | 0 | 6 |
| Example 5 | 14.1 | 5.9 | 1.0 | - | - | 50 | 0.9 | 1.0 | 5 |
| Example 6 | 14.1 | 5.9 | 1.0 | - | - | 50 | 0.9 | 1.0 | 5 |
| Example 7 | 12.2 | 6.9 | 1.9 | - | - | 50 | 1.9 | 1.9 | 5 |
| Example 8 | 12.4 | 6.7 | 1.9 | - | - | 48 | 1.7 | 1.9 | 7 |
| Example 9 | 14.7 | 4.8 | - | 1.5 | - | 49 | -0.2 | 1.5 | 6 |
| Example 10 | 14.0 | 6.0 | - | - | 1.0 | 49 | 1.0 | 1.0 | 6 |
| Example 11 | 14.1 | 5.9 | - | - | 1.0 | 49 | 0.9 | 1.0 | 6 |
| Comparative Example 1 | 17.1 | 3.9 | - | - | - | 53 | -1.1 | 0 | 2 |

As shown in Table 1, in Examples 1 to 11 where firing was performed with the mixed powder of the starting materials enclosed in an airtight state, the composite oxide of the composition in which the subscripts y, z, and u in the general formula LiₓNb_{16-y-z}M_{z}W_{5+y}O₅₅₋ᵤ respectively satisfy 0 ≤ x ≤ 5, -0.5 ≤ y ≤ 2, 0 ≤ z ≤ 2, and 4 ≤ u ≤ 9 was obtained. Whereas, in Comparative Example 1, although the same starting materials as those in Example 1 were used, the subscripts y and u fell below the above-noted ranges. It can be seen from the low value of the subscript y that in Comparative Example 1, as a result of performing firing without enclosing the starting materials in an airtight state, W had volatilized whereby the target composition could not be obtained. Furthermore, it can be seen from the low value of the subscript u that in Comparative Example 1, not many oxygen defects were introduced.

### <Wide-Angle X-Ray Diffraction Measurement>

Powders respectively obtained in Examples 1 to 11 and Comparative Example 1 were subjected to wide-angle X-ray diffraction measurement. The measurement was performed according to the details described above. Based on the obtained spectra, the analysis of the crystal structures was performed according to the Rietveld method.

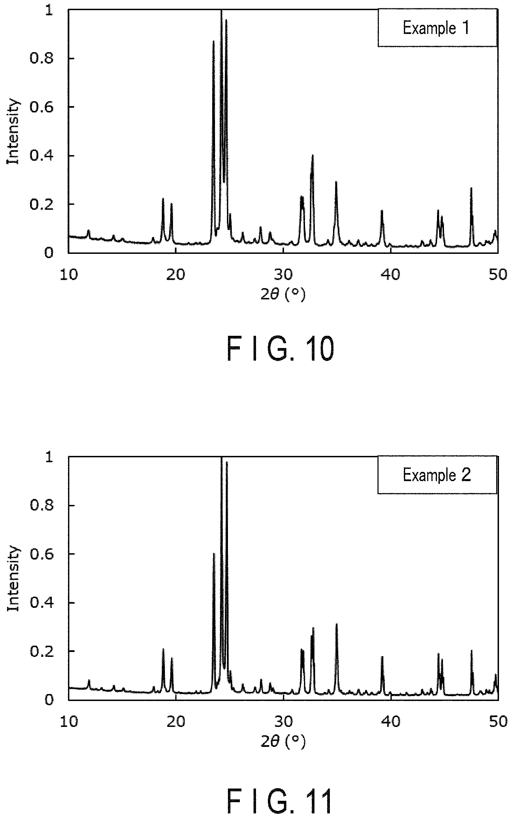

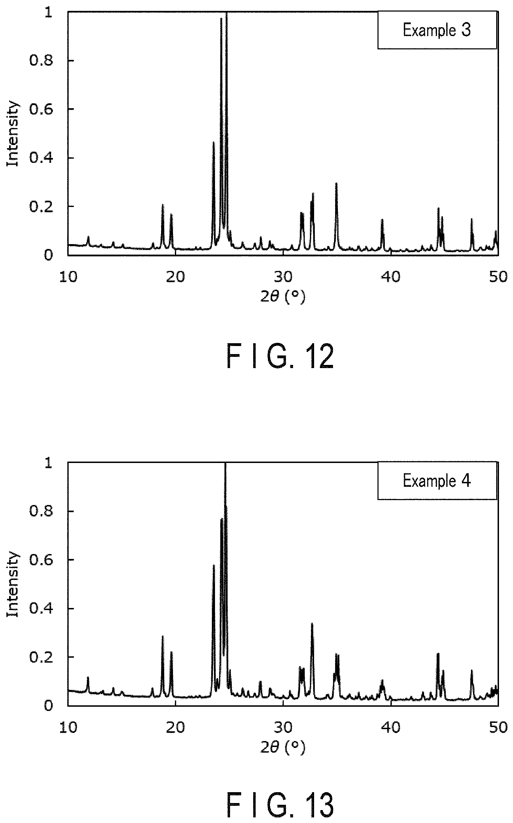

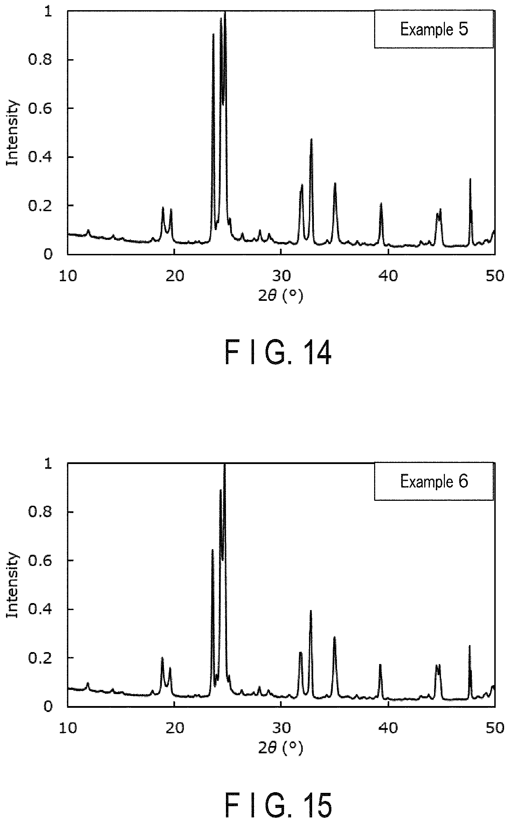

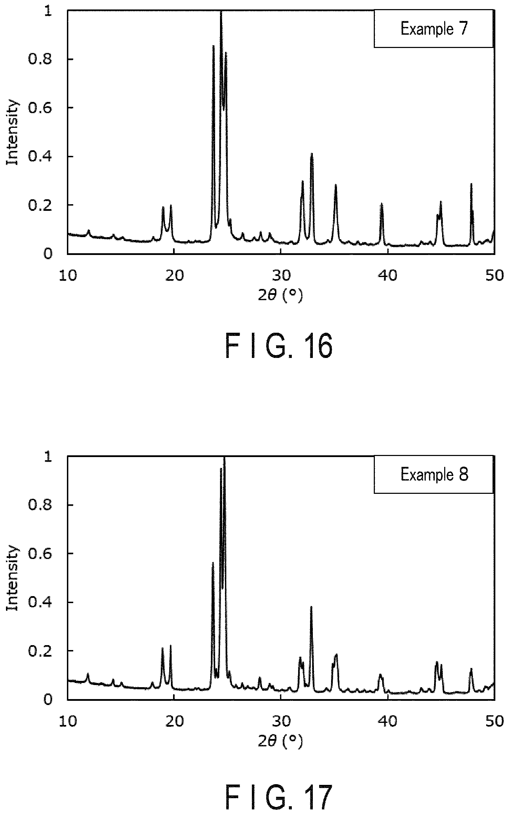

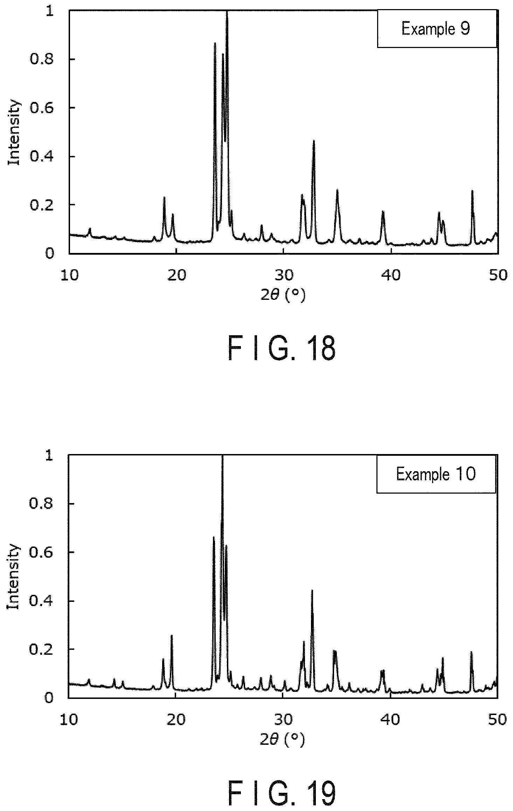

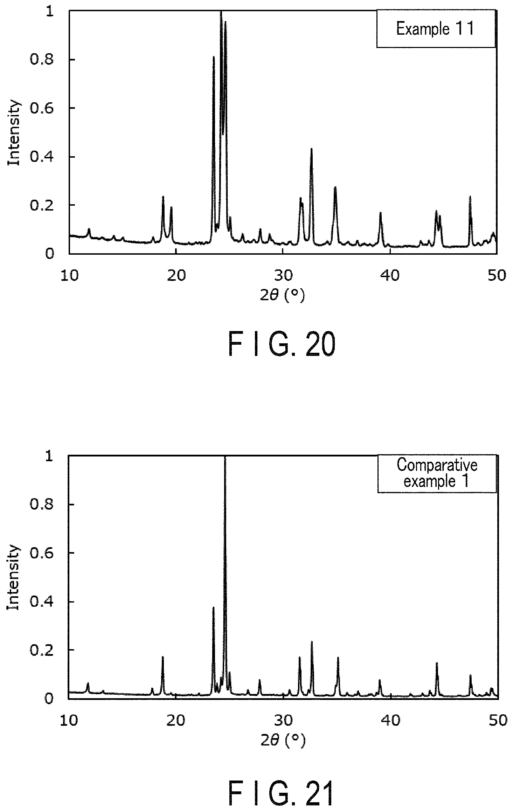

The respective spectra obtained are shown in FIGS. 10 to 21. Table 2 lists the peak intensity ratio I₂₄/I₂₅ between the peak intensity I₂₄ of the peak appearing in 2θ = 24.2 ± 0.3° and the peak intensity I₂₅ of the peak appearing in the range of 20 = 24.8 ± 0.3°, and the peak intensity ratio I₂₀/I₂₅ between the peak intensity I₂₀ of the peak appearing in the range of 2θ = 19.7 ± 0.5° and the peak intensity I₂₅.

**[Table 2]**

| | I_{24/}I₂₅ | I₂₀/I₂₅ |
|---|---|---|
| Example 1 | 1.04 | 0.21 |
| Example 2 | 1.02 | 0.18 |
| Example 3 | 0.97 | 0.17 |
| Example 4 | 0.77 | 0.22 |
| Example 5 | 0.97 | 0.19 |
| Example 6 | 0.89 | 0.16 |
| Example 7 | 1.21 | 0.24 |
| Example 8 | 0.95 | 0.22 |
| Example 9 | 0.82 | 0.16 |
| Example 10 | 1.59 | 0.41 |
| Example 11 | 1.05 | 0.20 |
| Comparative Example 1 | 0.09 | 0.02 |

### <Electrochemical measurements

First, 100% by mass of the active material powder obtained in each example, 10% by mass of acetylene black and 5% by mass of carbon nanofiber as electro-conductive agents, and 10% by mass of polyvinylidene fluoride (PVdF) as a binder were added to N-methylpyrrolidone (NMP) and mixed to provide a slurry. The slurry was applied onto one side of a current collector made of an aluminum foil having a thickness of 15 µm, dried, and pressed, whereby an electrode was prepared.

Next, an electrolyte solution was prepared by dissolving LiPF₆ supporting salt at a concentration of 1 mol/L in a mixed solvent in which ethylene carbonate (EC), diethyl carbonate (DEC), and ethylmethyl carbonate (EMC) were mixed at a volume ratio of 1 : 1 : 1.

The obtained electrode was used as a working electrode and Li metal was used respectively as a counter electrode and a reference electrode to prepare a coin cell using the obtained electrolytic solution, and electrochemical performance thereof was evaluated.

In the present examples, since lithium metal is used as the counter electrode in the coin cell for measurement, the electrode potential of each example is more noble than that of the counter electrode, and thus, the electrode according to each example operates as a positive electrode. Therefore, the definitions of charging and discharging would be opposite when the electrode of each example is used as a negative electrode. In order to avoid confusion, herein regarding the present examples, directions in which lithium ions are inserted into the electrode are collectively referred to as charging, and directions of extracting lithium ions from the electrode are consistently referred to as discharging. Note, that the active materials according to the first approach operate as a negative electrode active materials, when used in combination with a known positive electrode material.

The prepared electrochemical measurement cell was charged and discharged within a potential range of 1.0 V to 3.0 V (vs. Li/Li⁺) relative to metallic lithium electrode. A charge-discharge current value was set to 1 C (hourly discharge rate), and the charge capacity and discharge capacity were measured at room temperature. The discharge capacity obtained in this initial charge-discharge was divided by the charge capacity, to calculate the initial charge-discharge efficiency: initial charge-discharge efficiency (%) = [initial discharge capacity/initial charge capacity] × 100%.

Table 3 shows the evaluation results of the electrochemical performance of each example. Specifically, Table 3 shows the charge capacity, the discharge capacity, and the charge-discharge efficiency of the initial charge-discharge.

**[Table 3]**

| | Charge Capacity (mAh/g) | Discharge Capacity (mAh/g) | Initial Charge-Discharge Efficiency (%) |
|---|---|---|---|
| Example 1 | 316 | 282 | 89.4 |
| Example 2 | 290 | 262 | 90.4 |
| Example 3 | 288 | 259 | 90.0 |
| Example 4 | 309 | 278 | 89.9 |
| Example 5 | 304 | 273 | 89.8 |
| Example 6 | 289 | 261 | 90.3 |
| Example 7 | 297 | 270 | 90.7 |
| Example 8 | 291 | 264 | 90.7 |
| Example 9 | 294 | 265 | 90.0 |
| Example 10 | 295 | 265 | 90.0 |
| Example 11 | 292 | 263 | 90.1 |
| Comparative Example 1 | 283 | 254 | 89.6 |

As Table 3 shows, for the coin cells using the active material powders obtained in Examples 1 to 11, both the charge capacity and the discharge capacity were high, and the active material with which a high-capacity battery can be realized was obtained. When the active material powder obtained in Comparative Example 1 was used, while the charge-discharge efficiency was comparable to those of Examples 1 to 11, both values for the charge capacity and the discharge capacity were lower.

As such, the battery including, as the active material, the composite oxide represented by LiₓNb_{16-y-z}M_{z}W_{5+y}O₅₅₋ᵤ and having a monoclinic crystal structure can exhibit a high capacity.

According to at least one approach and example described above, an active material is provided. The active material includes a composite oxide having a monoclinic crystal structure and represented by a general formula LiₓNb_{16-y-z}M_{z}W_{5+y}O₅₅₋ᵤ. In the general formula, M includes at least one selected from the group consisting of Ta, Ti, Zr, Al, and Fe. Subscripts x, y, z, and u are numbers that satisfy 0 ≤ x ≤ 5, -0.5 ≤ y ≤ 2, 0 ≤ z ≤ 2, and 4 ≤ u ≤ 9. The active material can provide an active material and electrode that can realize a high capacity secondary battery, a high capacity secondary battery and battery pack, and a vehicle having the battery pack installed thereon.

While certain arrangements have been described, these arrangements have been presented by way of example only, and are not intended to limit the scope of the inventions. Indeed, the active materials, electrodes, secondary batteries, battery packs, and vehicles described herein may be embodied in a variety of other forms; furthermore various omissions, substitutions and changes in the form of the apparatuses described herein may be made.

## Claims

1. An active material comprising a composite oxide, the composite oxide having a monoclinic crystal structure and represented by a general formula LiₓNb_{16-y-z}M_{z}W_{5+y}O₅₅₋ᵤ where M comprises at least one selected from the group consisting of Ta, Ti, Zr, Al, and Fe, and 0 ≤ x ≤ 5, - 0.5 ≤ y ≤ 2, 0 ≤ z ≤ 2, and 4 ≤ u ≤ 9.

2. The active material according to claim 1, wherein in a diffraction spectrum according to powder X-ray diffraction, a peak intensity ratio I₂₄/I₂₅ between a peak intensity I₂₄ of a peak having highest intensity appearing in a range of 2θ = 24.2 ± 0.3° and a peak intensity I₂₅ of a peak appearing in a range of 2θ = 24.8 ± 0.3° is within a range of 0.5 ≤ I₂₄/I₂₅ ≤ 1.5.

3. The active material according to claim 1 or 2, wherein in a diffraction spectrum according to powder X-ray diffraction, a peak intensity ratio I₂₀/I₂₅ between a peak intensity I₂₀ of a peak having highest intensity appearing in a range of 2θ = 19.7 ± 0.5° and a peak intensity I₂₅ of a peak appearing in a range of 2θ = 24.8 ± 0.3° is within a range of 0.1 ≤ I₂₀/I₂₅ ≤ 0.5.

4. The active material according to any one of claims 1 to 3, wherein M in the general formula is either one of Ta or Ti.

5. The active material according to any one of claims 1 to 4, further comprising at least one selected from the group consisting of Sc, Y, V, Cr, Co, Mn, and Ga.

6. An electrode comprising the active material according to any one of claims 1 to 5.

7. The electrode according to claim 6, further comprising an active material-containing layer, the active material-containing layer comprising the active material.

8. A secondary battery (100) comprising:
a positive electrode (5);
a negative electrode (3); and
an electrolyte,
the negative electrode (3) comprising the electrode according to claim 6 or 7.

9. A battery pack (300) comprising the secondary battery (100) according to claim 8.

10. The battery pack (300) according to claim 9, further comprising:
an external power distribution terminal (350); and
a protective circuit (346).

11. The battery pack (300) according to claim 9 or 10, comprising plural of the secondary battery (100), the secondary batteries (100) being electrically connected in series, in parallel, or in combination of in-series connection and in-parallel connection.

12. A vehicle comprising the battery pack (300) according to any one of claims 9 to 11.

13. The vehicle (400) according to claim 12, wherein the vehicle (400) comprises a mechanism configured to convert kinetic energy of the vehicle into regenerative energy.

## Patentansprüche

1. Aktivmaterial, umfassend ein Kompositoxid, wobei das Kompositoxid eine monokline Kristallstruktur aufweist und durch eine allgemeine Formel LiₓNb_{16-y-z}M_{z}W_{5+y}O₅₅₋ᵤ dargestellt wird, worin M mindestens eines, ausgewählt aus der Gruppe, bestehend aus Ta, Ti, Zr, Al und Fe, umfasst und 0 ≤ x ≤ 5, -0,5 ≤ y ≤ 2, 0 ≤ z ≤ 2 und 4 ≤ u ≤ 9.

2. Aktivmaterial gemäß Anspruch 1, wobei in einem Beugungsspektrum gemäß Pulver-Röntgenbeugung ein Peakintensitätsverhältnis I₂₄/I₂₅ zwischen einer Peakintensität I₂₄ eines Peaks mit der höchsten Intensität, der im Bereich von 2θ = 24,2 ± 0,3° auftritt, und einer Peakintensität I₂₅ eines Peaks, der im Bereich von 2θ = 24,8 ± 0,3° auftritt, im Bereich von 0,5 ≤ I₂₄/I₂₅ ≤ 1,5 liegt.

3. Aktivmaterial gemäß Anspruch 1 oder 2, wobei in einem Beugungsspektrum gemäß Pulver-Röntgenbeugung ein Peakintensitätsverhältnis I₂₀/I₂₅ zwischen einer Peakintensität I₂₀ eines Peaks mit der höchsten Intensität, der im Bereich von 2θ = 19,7 ± 0,5° auftritt, und einer Peakintensität I₂₅ eines Peaks, der im Bereich von 2θ = 24,8 ± 0,3° auftritt, im Bereich von 0,1 ≤ I₂₀/I₂₅ ≤ 0,5 liegt.

4. Aktivmaterial gemäß einem der Ansprüche 1 bis 3, wobei M in der allgemeinen Formel entweder Ta oder Ti ist.

5. Aktivmaterial gemäß einem der Ansprüche 1 bis 4, ferner umfassend mindestens eines, ausgewählt aus der Gruppe, bestehend aus Sc, Y, V, Cr, Co, Mn und Ga.

6. Elektrode, umfassend das Aktivmaterial gemäß einem der Ansprüche 1 bis 5.

7. Elektrode gemäß Anspruch 6, ferner umfassend eine aktivmaterialhaltige Schicht, wobei die aktivmaterialhaltige Schicht das Aktivmaterial umfasst.

8. Sekundärbatterie (100), umfassend:
eine positive Elektrode (5);
eine negative Elektrode (3); und
einen Elektrolyten,
wobei die negative Elektrode (3) die Elektrode gemäß Anspruch 6 oder 7 umfasst.

9. Batteriepack (300), umfassend die Sekundärbatterie (100) gemäß Anspruch 8.

10. Batteriepack (300) gemäß Anspruch 9, ferner umfassend:
einen externen Stromverteilungsanschluss (350); und
eine Schutzschaltung (346).

11. Batteriepack (300) gemäß Anspruch 9 oder 10, umfassend mehrere der Sekundärbatterien (100), wobei die Sekundärbatterien (100) elektrisch in Reihe, parallel oder in einer Kombination von Reihenschaltung und Parallelschaltung geschaltet sind.

12. Fahrzeug, umfassend den Batteriepack (300) gemäß einem der Ansprüche 9 bis 11.

13. Fahrzeug (400) gemäß Anspruch 12, wobei das Fahrzeug (400) einen Mechanismus umfasst, der zum Umwandeln von kinetischer Energie des Fahrzeugs in regenerative Energie konfiguriert ist.

## Revendications

1. Matériau actif comprenant un oxyde composite, l'oxyde composite présentant une structure cristalline monoclinique et représenté par une formule générale LiₓNb_{16-y-z}M_{z}W_{5+y}O₅₅₋ᵤ où M comprend au moins un élément sélectionné parmi le groupe consistant en Ta, Ti, Zr, Al, et Fe, et 0 ≤ x ≤ 5, -0,5 ≤ y ≤ 2, 0 ≤ z ≤ 2, et 4 ≤ u ≤ 9.

2. Matériau actif selon la revendication 1, dans lequel, dans un spectre de diffraction selon une diffraction des rayons X sur poudre, un rapport d'intensité de pic I₂₄/I₂₅ entre une intensité de pic I₂₄ d'un pic présentant une intensité la plus élevée apparaissant dans une plage de 2θ = 24,2 ± 0,3° et une intensité de pic I₂₅ d'un pic apparaissant dans une plage de 2θ = 24,8 ± 0,3° est dans une plage de 0,5 ≤ I₂₄/I₂₅ ≤ 1,5.

3. Matériau actif selon la revendication 1 ou 2, dans lequel, dans un spectre de diffraction selon une diffraction des rayons X sur poudre, un rapport d'intensité de pic I₂₀/I₂₅ entre une intensité de pic I₂₀ d'un pic présentant une intensité la plus élevée apparaissant dans une plage de 2θ = 19,7 ± 0,5° et une intensité de pic I₂₅ d'un pic apparaissant dans une plage de 2θ = 24,8 ± 0,3° est dans une plage de 0,1 ≤ I₂₀/I₂₅ ≤ 0,5.

4. Matériau actif selon l'une quelconque des revendications 1 à 3, dans lequel M dans la formule générale est soit Ta soit Ti.

5. Matériau actif selon l'une quelconque des revendications 1 à 4, comprenant en outre au moins un élément sélectionné parmi le groupe consistant en Sc, Y, V, Cr, Co, Mn, et Ga.

6. Électrode comprenant le matériau actif selon l'une quelconque des revendications 1 à 5.

7. Électrode selon la revendication 6, comprenant en outre une couche contenant un matériau actif, la couche contenant un matériau actif comprenant le matériau actif.

8. Batterie (100) secondaire comprenant :
une électrode positive (5) ;
une électrode négative (3) ; et
un électrolyte,
l'électrode (3) négative comprenant l'électrode selon la revendication 6 ou la revendication 7.

9. Bloc-batterie (300) comprenant la batterie (100) secondaire selon la revendication 8.

10. Bloc-batterie (300) selon la revendication 9, comprenant en outre :
un terminal (350) de distribution électrique externe ; et
un circuit de protection (346).

11. Bloc-batterie (300) selon la revendication 9 ou 10, comprenant plusieurs des batteries (100) secondaires, les batteries (100) secondaires étant connectées électriquement en série, en parallèle ou selon une combinaison d'une connexion en série et d'une connexion en parallèle.

12. Véhicule comprenant le bloc-batterie (300) selon l'une quelconque des revendications 9 à 11.

13. Véhicule (400) selon la revendication 12, dans lequel le véhicule (400) comprend un mécanisme configuré pour convertir l'énergie cinétique du véhicule en énergie régénérative.
